# EUROPEAN PATENT SPECIFICATION

(11) **EP 1 401 264 B1**
(45) Date of publication and mention of the grant of the patent: **10.12.2014**
(21) Application number: 02742510.7
(22) Date of filing: 28.06.2002
(51) Int. Cl.: A01K 11/00, A01K 29/00, A22B 5/00

(54) **TRACKING AND MARKING SYSTEM**
VERFOLGUNGS- UND MARKIERUNGSSYSTEM
SYSTÈME DE TRACAGE ET DE MARQUAGE

(30) Priority: 04.07.2001 AU PR612201; 23.11.2001 AU PR902401
(43) Date of publication of application: 31.03.2004
(73) Proprietor: Aleis Trakit Pty Ltd, Jandowae, Queensland 4410 (AU)
(72) Inventor: FINLAYSON, John, Douglas, Frank, Brendale, Qld 4500 (AU)
(74) Representative: Chettle, Adrian John
(86) International application number: PCT/AU2002/000858
(87) International publication number: WO 2003/003820

(56) References cited:
- EP-B1- 0 398 338
- WO-A1-98/47351
- AU-A4- 2001 100 586
- DE-A1- 19 927 378
- US-A- 5 790 047

## Description

### FIELD OF THE INVENTION

This invention relates to the livestock industry in particular but not limited to a method and apparatus for enabling identification of animals and/or carcasses with non-electronic identification devices (EID) carrying animals or carcasses with EID from animals or carcasses carrying non-functioning EID.

### BACKGROUND OF THE INVENTION

The identification and tracking of animals and/or carcasses prior to and throughout being processed at an abattoir, saleyard or movement is extremely important. A principal purpose of electronically identifying animals is to individually identify animals or carcasses in a lot or run as well as the need to have a direct link to a national database for checking residue status as well as recording movements and a whole of life history of individual animals. This can be achieved as each animal or carcass passes an antenna designed to read EID carried by the animals or carcasses. If an animal or carcass does not carry an EID or its EID is not functioning, and is thus not able to be read by the antenna then that animal or carcass will be included in the lot or run and will be counted in error. The inclusion of animals or carcasses which are unable to be accounted for, can have disastrous consequences where animals or carcasses that have been electronically identified and are known to be disease free are inadvertently mixed with diseased animals or carcasses that have non-functioning EID and have been included in the lot or run. This has become especially important with the outbreaks of bovine spongiform encephalitis (BSE) and foot and mouth disease in the United Kingdom, Europe and South America. In order to protect the animals or carcasses in countries, which are not as yet affected by these or other diseases, various methods of identifying and tracking animals or carcasses have been developed. Among the more effective tracking and identification systems is the use of electronic ear tags or rumen pellets, which are ingested by a ruminant animal, or the use of other electronic identification devices. Prior art have been described in Patent Nos. WO 97/46083 and WO 93/22907 in the case of tags and PCT/AU95/00218 in the case of pellets.

### OBJECT OF THE INVENTION

It is therefore an object of the present invention to provide an apparatus and a method that seeks to overcome some of the disadvantages and limitations of the prior art or to at least provide the public with a useful choice.

### STATEMENT OF THE INVENTION

According to one aspect, the invention resides in an identification apparatus for use with animals or carcasses, the apparatus including in combination
electronic reading means having an antenna to read electronic signals from electronic identification devices (EID) carried by animals or carcasses moving past the antenna,
marking means adapted to mark the animals or carcasses with a visually distinct substance typically paint, powder, or dye, or any other marking substance by which animals or carcasses can be visually distinguished for counting, drafting or sorting,
motion sensing means adapted to detect the animal or carcass moving past the motion sensing means,
control means adapted to control and co-ordinate the operations of the EID reading means, the motion sensing means and the marking means, wherein in use,
animals or carcasses which pass the motion sensing means and the antenna and have either activated or not activated the electronic reading means are selectively marked or not marked by the marking means so that the animals or carcasses can be selectively identified and counted, drafted or sorted according to their markings.

Preferably the identification apparatus is portable and easily transportable.

Preferably, there is a race or defined passage for animals or carcasses to ensure correct operation of the identification apparatus herein described.

The EID are preferably in the form of ingested rumen pellets, tags or other transponder devices attached or inserted into animals or carcasses which are actuated and detected by circuitry of the antenna.

Preferably, the marking means comprises a solenoid or other equivalent device, or hydraulic or pneumatic actuators used to brush, spray or otherwise paint a mark on the back or another part of the animal or carcass. In the alternative, other marking means such as powder marking means can be used to achieve the same effect.

In one version, the marking means can include multiple spray heads of different coloured substance such as paint or powder from several pressure packs or airless spray devices or can comprise a single spray head having access to several pressure pack spray devices.

Preferably, there is a visual and/or an audible alarm system such as a light and/or a buzzer or bell, respectively which is actuated when an animal or a carcass passes an antenna without activating the electronic reading means and is marked by the marking means.

Preferably, the positions of the antenna, the marking means and the motion sensing means are adjustable to suit animals or carcasses of various sizes.

In another version, the mark can be an identifiable shape such as a circle or square or star or other markings including numbers or letters or a combination of the same and in different colours.

Preferably the motion sensing means is photoelectric sensing means wherein a beam of light between a photo emitter and a photo sensor device is interrupted by the passage of an animal or carcass.

In the alternative, the motion sensing means can be infrared (IR) sensing means or microwave sensing means where infrared and microwave beams, respectively, are interrupted by the passage of the animal or carcass or can be any other motion sensing means.

Preferably, the control means is microprocessor control means adapted to co-ordinate signals received from the antenna and the motion sensing means to cause activation or de-activation of the marking means under the correct conditions.

Preferably, the EID reading means and the motion sensing means can be operated independently to provide independent means of counting animals or carcasses such as by computerised means or visually and manually counting or other counting means.

Preferably, the marking means can be operated independently of the EID reading means or in conjunction with either the EID reading means, or the motion sensing means to provide an ability to mark non-EID, EID or non-functioning EID carrying animals or carcasses as required.

Preferably, the marking means is adapted to apply one or more than one coloured mark allowing for different groups of animals or carcasses to be marked with different colours or marks as required.

Preferably, the identification apparatus is mains powered but can also be powered by a battery back up system having solar or other sources of charging the battery.

In another aspect the invention resides in a method of identifying non-EID and non-functioning EID carrying animals or carcasses from EID carrying animals or carcasses including the steps of:
a) moving animals or carcasses along a race or defined passage associated with an antenna of an EID reading means, a motion sensing means and a marking means, the operation of all of which is controlled and co-ordinated by microprocessor control means;
b) marking with a distinguishing or identifiable colour marking substance typically a paint, powder, dye, or other marking substance, animals or carcasses which have passed the antenna without recording a signal where the EID is non-functioning or absent but which have been detected by the motion sensing means; actuating a visual and or audible alarm, and
c) visually identifying the animals or carcasses so marked by their distinguishable marks thereby allowing for the drafting or sorting and or identification of particular animals or carcasses.

### BRIEF DESCRIPTION OF THE DRAWINGS

In order that the present invention be more readily understood and put into practical effect, reference will now be made to the accompanying illustrations wherein:
Figure 1 is a side view of a preferred embodiment of the invention according to Example 1; and
Figure 2 is a side view of the invention according to Example 2.

### DETAILED DESCRIPTION OF THE DRAWINGS

### Example 1:

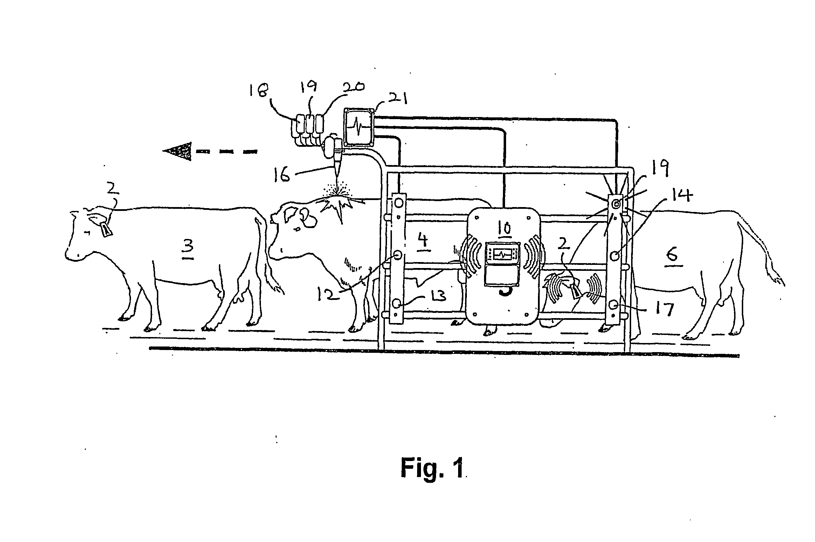

Referring now to Figure 1, there is shown a preferred embodiment of the invention according to Example 1. There is shown an antenna 10 for reading electronic signals from electronic identification transponders housed in rumen pellets, ear tags 2 or other devices on animals 3,4,6 as they pass by the antenna. The antenna operates in conjunction with one or more strategically located motion sensing means 12, 13, 14, 17 preferably in the form of photo sensing means comprising a photo emitter device for example, a light emitting diode (LED) which emits a beam of light received by photo sensor devices such as a photo cell. It will be clear to those skilled in the art that other suitable sensors can also be used. Interruption of the light beam by an animal results in a signal sent to the control means (not shown). The control means 21 determines whether or not the passing animal is carrying functioning or non-functioning or not carrying EID (2) before deciding whether or not to activate the marking means 16.

Preferably, there is also a visual and/or audible alarm 19 such as a light and a buzzer or bell which is actuated as an animal 6 passes the antenna without the electronic reading means detecting the presence of an EID. If there is a functioning EID then the animal may be allowed to proceed without being marked. Alternatively, the animal may be marked with a distinctly different mark to that used for non-EID or non-functioning EID carrying animals. If there has been no reading of the EID such as where the EID is not functioning or in the absence of an EID, the marking means is activated by the control means to apply a different identifiable or distinguishable coloured mark to the animal. The marking means 16 can be any of a variety of types including those actuated mechanically or as shown preferably in the form of a solenoid operated battery of pressure or airless spray units 18,19,20, to effect marking with a coloured paint, powder, dye or any other marking substance, preferably of a distinguishable tone or shade for ready visual identification and to allow for easy drafting or sorting of particular animals. In the alternative, the marking means can comprise powder dispensing means whereby a blotch of coloured powder or any other marking, can be applied to an animal to achieve the same effect. In some versions, the markings can be identifiable shapes such as circles or squares or can be a number or a letter or a combination of the same. The motion sensing means is preferably able to operate independently of the transponder reading means so that it can also function as a secondary counting means. Preferably the marking means can also be operated independently of the transponder reading means but in co-operation with the motion sensing means thereby allowing for particular groups of animals to be marked as they pass the motion sensing means which activates the marking means via the control means 21. The marking means can include multiple spray heads 18, 19, 20 spraying different coloured substance from several pressure pack or airless spray devices or can comprise a single spray head (not shown) having access to several pressure pack spray devices of different coloured substance allowing for different groups of animals to be marked with different colours or markings of different shapes, numbers or letters or a combination of the same.

Multiple colours or other markings, or mixes of colours together with other markings can also be used. Animals that trigger the reader can be marked differently to animals carrying no or non-functioning EID. For example, one set could be marked red, the other, white for all the animals in one lot/pen. Another combination, say red, for animals carrying functioning EID and yellow for those carrying no or non-functioning EID, could be used for animals in another pen to maintain their separate identities, for example, if they are later merged. This will allow them to be separated into their required groupings.

Preferably the antenna, the marking means and the motion sensing means are height adjustable to accommodate animals of different sizes. Preferably the system is mains powered but has a generator and/or a battery back up system which can be solar charged or charged by a wind generator or other equivalent means.

### Example 2:

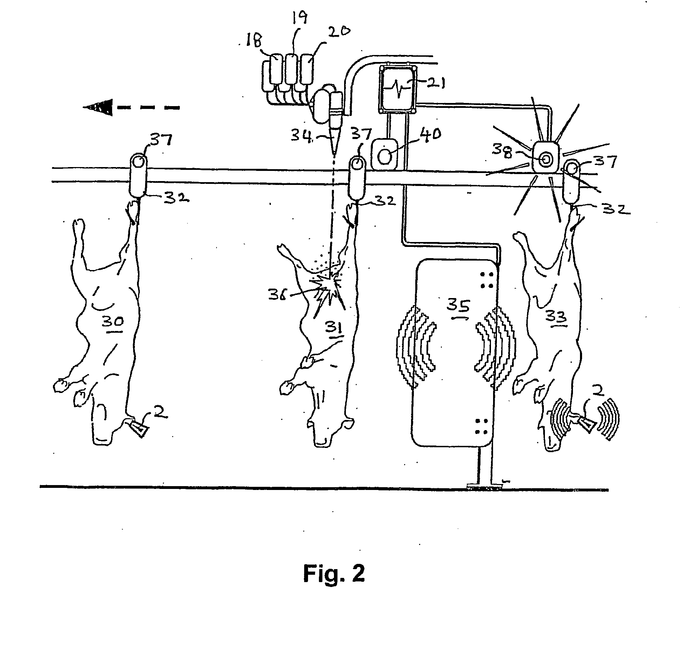

Referring now to Figure 2, there is shown another preferred embodiment of the invention according to Example 2. There is shown a carcass 30 mounted on a hook 32 which is transported along a conveyor system as part of a kill chain in an abattoir application. Electronic identification devices (not shown) such as rumen pellets or ear tags 2 or other transponder devices carried by the carcass activate/deactivate the signal sent by the sensors of the antenna 35 which controls the marking means 34, causing the carcass to be sprayed with a mark 36 according to criteria determined by a microprocessor control means 21.

If there is a functioning EID then the carcasses may be allowed to proceed without being marked. Alternatively, the carcass may be marked with a distinctly different mark to that used for non-EID or non-functioning EID carrying carcasses. If there has been no reading of the EID such as where the EID is not functioning or in the absence of an EID, the marking means can be activated or deactivated by the control means to apply a different identifiable or distinguishable coloured mark to the carcass. The marking means 34 can be any of a variety of types including those actuated mechanically or as shown preferably in the form of a solenoid operated battery of pressure or airless spray units 18,19,20, to effect marking with a coloured paint, powder, dye or any other marking substance, preferably of a distinguishable tone or shade for ready visual identification and to allow for easy drafting or sorting of particular carcasses. In the alternative, the marking means can comprise powder dispensing means whereby a blotch of coloured powder or any other marking, can be applied to a carcass to achieve the same effect. In some versions, the markings can be identifiable shapes such as circles or squares or can be a number or a letter or a combination of the same. The motion sensing means is preferably able to operate independently of the EID reading means so that it can also function as a secondary counting means. Preferably the marking means can also be operated independently of the EID reading means but in co-operation with the motion sensing means thereby allowing for particular groups of carcasses to be marked as they pass the motion sensing means which activates the marking means via the control means 21. The marking means can include multiple spray heads 18, 19, 20 spraying different coloured substance from several pressure pack or airless spray devices or can comprise a single spray head (not shown) having access to several pressure pack spray devices of different coloured substance allowing for different groups of carcasses to be marked with different colours or markings of different shapes, numbers or letters or a combination of the same.

Multiple colours or other markings, or mixes of colours together with other markings can also be used. Carcasses that trigger the reader can be marked differently to carcasses carrying no or non-functioning EID. For example, one set could be marked red, the other, white for all the carcasses in one lot. Another combination, say red, for carcasses carrying functioning EID and yellow for those carrying no or non-functioning EID, could be used for carcasses in another pen to maintain their separate identities, for example, if they are later mixed. This will allow the carcasses to be separated into their required groupings.

Preferably there is a visual and/or audible alarm system 38 such as a light and a buzzer or bell which is actuated if a carcass 31 carrying a non functioning EID or a carcass without an EID passes the sensors. Preferably the position of the antenna and the marking means can be adjusted to accommodate carcasses of different sizes. In Example 2, the motion sensing means preferably comprises motion sensors 37 in the hook and along the conveyor system 40.

The system is preferably mains powered but has the facility in the case of power failure for a generator or battery back up system with solar charging or other equivalent battery charging means to provide an alternative source of power.

It will be evident to the skilled addressee that carcasses of animals can be distinguishable by the marks applied to the carcass thereby allowing for the sorting and counting and identification of particular carcasses.

Preferably in both Examples 1 and 2, the entire identification apparatus is portable and easily transportable for installation in different locations.

### ADVANTAGES

The advantages of the present invention over the prior art can be said to include the following:
- The identification of animals or carcasses which do not carry EID, are carrying EID or are carrying non-functioning EID.
- The provision of a secondary counting system for counting animals or carcasses which is independent of an EID reading means.
- A marking system to enable easy visual identification of animals or carcasses so marked to facilitate the drafting or sorting and identification of particular animals or carcasses.
- The ability to mark groups of animals or carcasses with different colours, markings of different shapes, numbers or letters or a combination of the same.
- Suitable for general management of saleyard, abattoir or any livestock but not limited to these operations - regardless of any computerised database system utilised.

### VARIATIONS

Throughout the description and claims of this specification the word "comprise" and variations of that word such as "comprises" and "comprising", are not intended to exclude other additives, components, integers or steps. The term animal or carcass refers to that of livestock, birds and other animals, respectively. The term EID refers to electronic identification devices such as ear tags, rumen pellets and any other device used to house a transponder, being singular or plural as applicable.

## Claims

1. An identification apparatus for use with animals or carcasses, the apparatus including in combination electronic reading means having an antenna to read electronic signals from electronic identification devices (EID) carried by animals or carcasses moving past the antenna, marking means adapted to mark the animals or carcasses with a visually distinct substance typically paint, powder, or dye, or any other marking substance by which animals or carcasses can be visually distinguished for counting, drafting or sorting, motion sensing means adapted to detect the animal or carcass moving past the motion sensing means, control means adapted to control and co-ordinate the operations of the electronic reading means, the motion sensing means and the marking means, wherein in use, animals or carcasses which pass the motion sensing means and the antenna that have either activated or not activated the electronic reading means are selectively marked or not marked by the marking means so that the animals or carcasses can be selectively identified and counted, drafted or sorted according to their markings.

2. An identification apparatus as claimed in claim 1, wherein the EID are ingested rumen pellets, tags or other transponder devices attached or inserted into animals or carcasses which are actuated and detected by circuitry of the antenna.

3. An identification apparatus as claimed in claim 1 or 2, wherein the marking means comprises a solenoid or other equivalent device, or hydraulic or pneumatic actuators used to brush, spray or otherwise paint a mark on the back or another part of the animal or carcass.

4. An identification apparatus as claimed in any one of the abovementioned claims, wherein the marking means includes multiple single spray heads from several pressure packs or airless spray devices of different coloured substance such as paint or powder.

5. An identification apparatus as claimed in any one of claims 1 to 4, wherein the marking means includes a single spray head having access to several pressure pack or spray devices of different coloured substances such as paint or powder.

6. An identification apparatus as claimed in any one of the abovementioned claims, wherein there is a visual and/or an audible alarm system such as a light and/or a buzzer or bell, respectively which is actuated when an animal or a carcass passes an antenna without activating the electronic reading means and is marked by the marking means.

7. An identification apparatus as claimed in any one of the abovementioned claims, wherein the mark can be an identifiable shape such as a circle or square or star or other markings including numbers or letters or a combination of the same and in different colours.

8. An identification apparatus as claimed in any one of claims 1 to 7, wherein the motion sensing means can be infrared (IR) sensing means where an infrared beam is interrupted by the passage of the animal or carcass.

9. An identification apparatus as claimed in any one of claims 1 to 7, wherein the motion sensing means can be microwave sensing means where a microwave beam is interrupted by the passage of the animal or carcass or can be any other motion sensing means.

10. An identification apparatus as claimed in any one of the abovementioned claims, wherein the control means is microprocessor control means adapted to co-ordinate signals received from the antenna and the motion sensing means to cause activation or de-activation of the marking means.

11. An identification apparatus as claimed in any one of the abovementioned claims, wherein the marking means can be operated independently of the electronic reading means or in conjunction with either the electronic reading means, or the motion sensing means to provide an ability to mark non-EID, EID or non-functioning EID carrying animals or carcasses as required.

12. A method of identifying non-EID and non-functioning EID carrying animals or carcasses from EID carrying animals or carcasses including the steps of:
(a) moving animals or carcasses along a race or defined passage associated with an antenna of an EID reading means, a motion sensing means and a marking means, the operation of all of which is controlled and co-ordinated by microprocessor control means;
(b) marking with a distinguishing or identifiable colour marking substance typically a paint, powder, dye, or other marking substance, animals or carcasses which have passed the antenna without recording a signal where the EID is non-functioning or absent but which have been detected by the motion sensing means; actuating a visual and or audible alarm, and
(c) visually identifying the animals or carcasses so marked by their distinguishable marks thereby allowing for the drafting or sorting and or identification of particular animals or carcasses.

## Patentansprüche

1. Identifizierungsvorrichtung für Tiere oder Tierkörper, wobei die Vorrichtung in Kombination ein elektronisches Lesemittel, welche eine Antenne zum Lesen elektronischer Signale von elektronischen Identifizierungsvorrichtungen (EID), welche von Tieren oder Tierkörpern getragen werden, welche an der Antenne vorbeigeführt werden, Markierungsmittel, welche eingerichtet sind, um die Tiere oder Tierkörper mit einer sich optisch unterscheidenden Substanz zu markieren, typischerweise Farbe, Puder oder Farbstoff oder jedes andere Markierungsmittel, durch welches Tiere oder Tierkörper optisch zum Zählen, zur Verarbeitung oder zur Sortierung unterschieden werden können, Bewegungserkennungsmittel, welche eingerichtet sind, um das Tier oder den Tierkörper zu erkennen, welcher an den Bewegungserkennungsmitteln vorbeigeführt wird und Steuermittel umfasst, welche eingerichtet sind, um den Betrieb des elektronischen Lesemittels zu steuern und zu koordinieren, wobei die Bewegungserkennungsmittel und die Markierungsmittel bei ihrer Verwendung Tiere oder Tierkörper selektiv durch die Markierungsmittel markiert oder nicht markiert, welche die Bewegungserkennungsmittel und die Antenne passieren, welche das elektronische Lesemittel entweder aktiviert oder nicht aktiviert haben, so dass die Tiere oder Tierkörper selektiv identifiziert und gezählt, verarbeitet oder sortiert werden können gemäß ihrer Markierungen.

2. Identifizierungsvorrichtung nach Anspruch 1, wobei die EID als aufgenommene Pansenpellets, Schilder oder Transpondervorrichtungen ausgebildet sind, welche an Tieren oder Tierkörpern angebracht oder eingeführt werden und von einer Schaltung der Antenne betätigt und detektiert werden.

3. Identifizierungsvorrichtung nach Anspruch 1 oder 2, wobei die Markierungsmittel ein Solenoid oder eine andere äquivalente Vorrichtung oder hydraulische oder pneumatische Aktuatoren aufweisen, welche zum Bürsten, Sprühen oder anderweitigem Malen einer Markierung auf den Rücken oder anderen Teil des Tieres oder des Tierkörpers verwendet werden.

4. Identifizierungsvorrichtung nach einem der vorhergehenden Ansprüche, wobei die Markierungsmittel mehrere einzelne Sprühköpfe von mehreren Druckpaketen oder luftfreien Sprühgeräten mit verschiedenfarbigen Substanzen, etwa Farbe oder Puder, aufweisen.

5. Identifizierungsvorrichtung nach einem der Ansprüche 1 bis 4, wobei die Markierungsmittel einen einzelnen Sprühkopf mit Zugang zu verschiedenen Druckpaket- der Sprühvorrichtungen mit verschiedenfarbigen Substanzen, etwa Farbe oder Puder, aufweisen.

6. Identifizierungsvorrichtung nach einem der vorhergehenden Ansprüche, wobei ein optisches und/oder ein akustisches Alarmsystem vorgesehen ist, etwa ein Licht und/oder ein Summer oder Glocke, welches jeweils betätigt wird, wenn ein Tier oder ein Tierkörper eine Antenne passiert, ohne das elektronische Lesemittel zu betätigen und von den Markierungsmitteln markiert wird.

7. Identifizierungsvorrichtung nach einem der vorhergehenden Ansprüche, wobei die Markierung als eine identifizierbare Form, etwa als ein Kreis oder Quadrat oder Stern oder als andere Markierung mit Zahlen oder Buchstaben oder als eine Kombination derselben und in verschiedenen Farben ausgebildet sein kann.

8. Identifizierungsvorrichtung nach einem der Ansprüche 1 bis 7, wobei die Bewegungserkennungsmittel als Infrarot (IR)-Sensoren ausgebildet sein können, wobei ein Infrarotstahl von dem Passieren des Tieres oder Tierkörpers unterbrochen wird.

9. Identifizierungsvorrichtung nach einem der Ansprüche 1 bis 7, wobei die Bewegungserkennungsvorrichtung als Mikrowellensensor ausgebildet sein kann, wobei ein Mikrowellenstrahl von dem Passieren des Tiers oder Tierkörpers unterbrochen wird oder als jedes andere Bewegungserkennungsmittel ausgebildet sein kann.

10. Identifizierungsvorrichtung nach einem der vorhergehenden Ansprüche, wobei die Steuermittel als Mikroprozessorsteuerung ausgebildet sind, um Signale zu koordinieren, welche von der Antenne und den Bewegungserkennungsmitteln empfangen werden, um eine Aktivierung oder Deaktivierung der Markierungsmittel zu erreichen.

11. Identifizierungsvorrichtung nach einem der vorhergehenden Ansprüche, wobei die Markierungsmittel unabhängig von dem elektronischen Lesemittel betreibbar sind oder zusammen mit entweder dem elektronischen Lesemittel oder der Bewegungserkennungseinrichtung, um Tiere oder Tierkörper, welche kein EID, ein EID oder nichtfunktionierendes EID tragen, zu markieren.

12. Verfahren zum Identifizieren von Tieren oder Tierkörpern, welche kein EID oder ein nicht funktionierendes EID tragen, gegenüber Tieren oder Tierkörpern, welche ein EID tragen, mit den folgenden Schritten:
a) Bewegen von Tieren oder Tierkörpern entlang einer Bahn oder definierten Passage, welche mit einer Antenne eines EID-Lesemittels, eines Bewegungserkennungsmittels und eines Markierungsmittels in Verbindung steht, wobei die Durchführung der genannten Schritte von einem Mikroprozessor-Steuerungsmittel kontrolliert und koordiniert wird;
b) Markierung von Tieren oder Tierkörpern, welche eine Antenne ohne der Aufnahme eines Signales passiert haben, wobei das EID nicht funktioniert oder nicht vorhanden ist, welche jedoch von den Bewegungserkennungsmitteln detektiert wurden, mit einer unterscheidbaren oder identifizierbaren Farbmarkierungssubstanz, typischerweise eine Farbe, Pulver, Farbstoff oder ein anderer Markierungsstoff; Betätigen eines optischen oder akustischen Alarms, und
c) optisches Identifizieren der Tiere oder Tierkörper, sofern diese durch ihre unterscheidbaren Markierungen markiert sind und somit die Verarbeitung oder Sortierung und/oder Identifizierung von speziellen Tieren oder Tierkörpern ermöglichen.

## Revendications

1. Appareil d'identification utilisable sur des animaux ou des carcasses, comprenant une combinaison de moyen de lecture électronique équipé d'une antenne pour lire les signaux électroniques émis par les dispositifs d'identification électroniques (DIE) portés par les animaux ou les carcasses passant devant l'antenne, de moyen de marquage adapté pour marquer les animaux ou les carcasses à l'aide d'une substance visuellement reconnaissable, typiquement une peinture, une poudre, une teinture ou toute autre substance de marquage permettant de distinguer visuellement les animaux ou les carcasses afin de pouvoir les sélectionner, les choisir ou les trier, de détecteur de mouvement adapté afin de détecter l'animal ou la carcasse lors de son passage devant le détecteur, de moyen de commande adapté pour le contrôle et la coordination des opérations du dispositif de lecture électronique, du détecteur de mouvement et du moyen de marquage, qui lorsqu'il est utilisé, les animaux ou les carcasses qui passent devant le détecteur de mouvement et l'antenne, en activant ou non le dispositif de lecture électronique, sont marqués ou non, de façon sélective par le moyen de marquage, afin que les animaux ou les carcasses puissent être identifiés et comptés de façon sélective, et sélectionnés ou triés selon leur marquage.

2. Appareil d'identification comme revendiqué dans la revendication 1, dans lequel les DIE sont des granules ingérées demeurant dans le rumen, des étiquettes ou autres dispositifs à transpondeur fixés sur les animaux ou insérés dans les animaux ou les carcasses, qui sont actionnés et détectés par les circuits de l'antenne.

3. Appareil d'identification tel que revendiqué dans la revendication 1 ou 2, dans lequel le moyen de marquage comprend un électro-aimant ou autre dispositif équivalent, ou des actionneurs hydrauliques ou pneumatiques utilisés pour appliquer à la brosse, pulvériser ou apposer de toute autre façon une marque de peinture sur le dos ou sur une autre partie de l'animal ou de la carcasse.

4. Appareil d'identification tel que revendiqué dans l'une quelconque des revendications ci-dessus, dans lequel le moyen de marquage comprend de multiples têtes de pulvérisation simples, de plusieurs aérosols ou de dispositifs de pulvérisation non pneumatiques de différentes substances colorées comme de la peinture ou de la poudre.

5. Appareil d'identification comme revendiqué dans l'une quelconque des revendications 1 à 4, dans lequel le moyen de marquage comprend une tête de pulvérisation simple reliée à plusieurs aérosols ou dispositifs de pulvérisation de différentes substances colorées, comme de la peinture ou de la poudre.

6. Appareil d'identification comme revendiqué dans l'une quelconque des revendications ci-dessus, dans lequel se trouve un système d'alarme visuel et/ou sonore tel qu'un voyant et/ou un buzzer ou une sonnerie, respectivement, actionné lorsqu'un animal ou une carcasse passe devant une antenne sans activer le moyen de lecture électronique et est marqué par le moyen de marquage.

7. Appareil d'identification comme revendiqué dans l'une quelconque des revendications ci-dessus, dans lequel la marque peut consister en une forme identifiable comme un cercle, un carré ou une étoile ou tout autre marquage comprenant des chiffres, des lettres ou une combinaison des deux, de différentes couleurs.

8. Appareil d'identification comme revendiqué dans l'une quelconque des revendications 1 à 7, dans lequel le dispositif de détection de mouvement peut être un capteur infrarouge (IR), dans lequel le rayon infrarouge est interrompu par le passage de l'animal ou de la carcasse.

9. Appareil d'identification comme revendiqué dans l'une quelconque des revendications 1 à 7, dans lequel le dispositif de détection de mouvement peut être un capteur hyperfréquences dans lequel le faisceau hyperfréquence est interrompu par le passage de l'animal ou de la carcasse ou peut consister en n'importe quel autre dispositif de détection de mouvement.

10. Appareil d'identification comme revendiqué dans l'une quelconque des revendications ci-dessus, dans lequel le moyen de commande est une commande à microprocesseur adaptée pour coordonner les signaux reçus de l'antenne et du détecteur de mouvement pour provoquer l'activation ou la désactivation du moyen de marquage.

11. Appareil d'identification comme revendiqué dans l'une quelconque des revendications ci-dessus, dans lequel le moyen de marquage peut être opéré indépendamment du moyen de lecture électronique ou en conjonction avec, soit le moyen de lecture électronique, soit le détecteur de mouvement afin de pouvoir marquer les animaux ou les carcasses non DIE, DIE ou DIE défectueux, selon le besoin.

12. Procédé d'identification des animaux ou des carcasses non porteurs d'un DIE ou porteurs d'un DIE ne fonctionnant pas, par rapport aux animaux ou aux carcasses porteurs d'un DIE, comprenant les étapes suivantes :
(a) déplacement des animaux ou des carcasses le long d'un couloir ou d'un passage défini associé à une antenne de moyen de lecture de DIE, à un détecteur de mouvement et à un moyen de marquage, l'intégralité de l'opération étant commandée et coordonnée par un moyen de commande à microprocesseur ;
(b) marquage avec une substance de marquage colorée distincte ou identifiable, typiquement de la peinture, de la poudre, de la teinture ou toute autre substance de marquage, des animaux ou des carcasses étant passés devant l'antenne sans enregistrer un signal en cas d'absence de DIE ou en cas de DIE ne fonctionnant pas, mais ayant été détectés par le détecteur de mouvement ; activation d'une alarme visuelle et/ou sonore, et
(c) identification visuelle des animaux ou des carcasses ainsi marqués par leurs marques distinctes, ce qui permet de sélectionner, de trier et/ou d'identifier les animaux ou les carcasses concernés.
